(19) Europäisches Patentamt

European Patent Office

Office européen des brevets

(11) EP 0 611 979 B1

(12) FASCICULE DE BREVET EUROPEEN

(45) Date de publication et mention
de la délivrance du brevet:
**18.09.1996 Bulletin 1996/38**

(51) Int Cl.$^6$: **G02C 7/06**

(21) Numéro de dépôt: **94400327.6**

(22) Date de dépôt: **15.02.1994**

(54) **Lentille ophtalmique pour vision simultanée pour la correction de la presbytie et jeu de deux telles lentilles ophtalmiques pour un même porteur**

Simultanlinse für die Korrektur der Presbyopie und entsprechendes Linsenpaar

Ophthalmic lens for simultaneous vision for correction of presbyopia and pair of such lenses for the same wearer

(84) Etats contractants désignés:
**CH DE ES GB IT LI NL SE**

(30) Priorité: **18.02.1993 FR 9301831**

(43) Date de publication de la demande:
**24.08.1994 Bulletin 1994/34**

(73) Titulaire: **ESSILOR INTERNATIONAL
Compagnie Générale d'Optique
F-94220 Charenton le Pont (FR)**

(72) Inventeurs:
• **Baude, Dominique
F-93400 Saint-Ouen (FR)**

• **Monteil, Pierre
F-75014 Paris (FR)**

(74) Mandataire: **CABINET BONNET-THIRION
95 Boulevard Beaumarchais
75003 Paris (FR)**

(56) Documents cités:
**EP-A- 0 132 955      EP-A- 0 138 394
EP-A- 0 149 100      EP-A- 0 307 876
EP-A- 0 381 567      EP-A- 0 453 136
GB-A- 2 139 375      US-A- 5 002 382
US-A- 5 139 325**

**Description**

Il est décrit, dans le brevet français qui, enregistré sous le No 89 01417, a été publié sous le No 2 642 854 et auquel correspond la demande de brevet européen publiée sous le No 0 381 567, une lentille ophtalmique à symétrie rotationnelle et à vision simultanée dont la courbe représentative de la puissance, et il s'agit en pratique de la puissance sagittale, en fonction de la distance radiale à compter de l'axe optique de l'ensemble, s'inscrit dans une zone comprise entre une courbe enveloppe inférieure et une courbe enveloppe supérieure qui, répondant à des équations polynomiales déterminées à cet effet, permettent d'y définir deux zones de vision annulaires distinctes, l'une correspondant à la vision de loin, l'autre correspondant à la vision de près, avec, en pratique, en continu entre celles-ci, une ou plusieurs zones de vision intermédiaire.

Cette lentille ophtalmique, qui peut tout aussi bien être une lentille de contact qu'un implant intraoculaire ou qu'une lentille intracornéenne, et qui en pratique présente au moins une face asphérique ou comporte un gradient d'indice, est plus particulièrement destinée à la correction de la presbytie.

Les paramètres des équations polynomiales auxquelles répondent les courbes enveloppes de la courbe représentative de sa puissance dépendent précisément de l'addition, c'est-à-dire, globalement, de l'addition de puissance, correspondant au degré de presbytie du porteur à corriger.

En pratique, dans le brevet français en question, il a été choisi, de manière préférentielle, de ne privilégier aucune des deux zones de vision de loin et de près.

Pour ce faire, la surface $S_{VL}$ de la zone de vision de loin, et la surface $S_{VP}$ de la zone de vision de près sont entre elles dans la relation suivante :

$$\frac{S_{VL}}{S_{VP}} \geq 3 \qquad (I)$$

Cette disposition donne satisfaction dans une majorité de cas.

Pour d'autres cas, cependant, les performances en vision de près, ou en vision de loin, s'avèrent insuffisantes.

La présente invention a tout d'abord pour objet une lentille ophtalmique à symétrie rotationnelle et à vision simultanée pour la correction de la presbytie comportant deux zones de vision annulaires distinctes l'une, $Z_{VL}$, correspondant à la vision de loin, l'autre, $Z_{VP}$, correspondant à la vision de près, la courbe représentative de la puissance P en fonction de la distance radiale h à compter de l'axe optique de l'ensemble s'inscrivant dans une zone comprise entre une courbe enveloppe inférieure $P_{inf}$ et une courbe enveloppe supérieure $P_{sup}$ répondant à des équations polynomiales déterminées dans lesquelles les coefficients dépendent de l'addition de puissance correspondant au degré de presbytie du porteur, l'une quelconque des deux zones de vision de loin $Z_{VL}$ ou de près $z_{VP}$ étant renforcée par rapport à l'autre, les surfaces $S_{VL}$, $S_{VP}$ correspondantes étant entre elles dans la relation suivante:

$$1,8 \leq \frac{S_{VL}}{S_{VP}} \leq 3,6$$

et les courbes enveloppe inférieure $P_{inf}$ et enveloppe supérieure $P_{sup}$ de la puissance P répondant aux équations polynomiales suivantes :

$$P_{inf} = f(h) = \sum_{i=0}^{i=6} A'_i \, h^{2i} + P_{VL}$$

$$P_{sup} = f(h) = \sum_{i=0}^{i=6} A''_i \, h^{2i} + P_{VL}$$

dans lesquelles $P_{VL}$ est la puissance nécessaire pour la vision de loin, avec, pour un renfort de la zone de vision de près $Z_{VP}$ par rapport à la zone de vision de loin $Z_{VL}$, des coefficients $A'_i$ et $A''_i$ déterminés, précisés dans la revendication 1, et, pour un renfort de la zone de vision de loin $Z_{VL}$ par rapport à la zone de vision de près $Z_{VP}$, des coefficients $A'_i$ et $A''_i$ également déterminés, précisés dans la revendication 3.

Elle a encore pour objet tout jeu de deux lentilles ophtalmiques qui sont appariées l'une à l'autre pour un même porteur, l'une pour la correction de l'oeil gauche de celui-ci, l'autre pour la correction de son oeil droit, et dans l'une au moins desquelles l'une quelconque des deux zones de vision de près ou de loin est ainsi renforcée par rapport à l'autre.

Par exemple, à cette lentille ophtalmique à zone de vision renforcée peut être appariée une lentille ophtalmique standard, c'est-à-dire une lentille ophtalmique dont les deux zones de vision de près et de loin sont équivalentes.

En variante, il peut lui être apparié une lentille ophtalmique ayant elle aussi une zone de vision renforcée, soit qu'il s'agisse de la même zone de vision qu'elle, soit qu'il s'agisse de la zone de vision opposée.

Il est ainsi avantageusement possible de satisfaire au mieux au plus grand nombre de cas.

Certes, il est déjà connu, notamment par la demande de brevet européen publiée sous le No 0 138 394, de prévoir une extension ou une réduction de la zone de vision de près pouvant conduire à un rapport de surfaces différent de un entre elle et la zone de vision de loin.

Mais, outre qu'il est préférentiellement fait en sorte que la surface de la zone de vision de près corresponde sensiblement à la moitié de la surface de la pupille du porteur à corriger, cette demande de brevet européen concerne une lentille bifocale, c'est-à-dire une lentille dépourvue de zone de vision intermédiaire entre ses zones de vision de près et de vision de loin.

Il n'en est pas de même dans la lentille ophtalmique suivant l'invention.

Certes, également, il a déjà été proposé, notamment par la demande de brevet européen publiée sous le No 0 453 136, de répartir de manière asymétrique les zones de vision de près et de loin dans l'une et l'autre des deux lentilles ophtalmiques destinées à un même porteur.

Mais, cette demande de brevet européen concerne une lentille à réseau diffractif dans laquelle, comme précédemment, il n'existe pas de zone de vision intermédiaire.

Les objets de l'invention, leurs caractéristiques et leurs avantages, ressortiront d'ailleurs de la description qui va suivre, à titre d'exemple, en référence aux dessins schématiques annexés sur lesquels :

la figure 1 est une vue en coupe axiale d'une lentille ophtalmique suivant l'invention ;

les figures 2A, 2B, 2C, 2D sont, chacune respectivement, des diagrammes représentatifs de la puissance de cette lentille ophtalmique pour diverses valeurs de l'addition, lorsque sa zone de vision de près est renforcée ;

les figures 3A, 3B, 3C, 3D sont, chacune respectivement, des diagrammes analogues à ceux des figures 2A, 2B, 2C, 2D, lorsque c'est la zone de vision de loin de la lentille ophtalmique qui est renforcée.

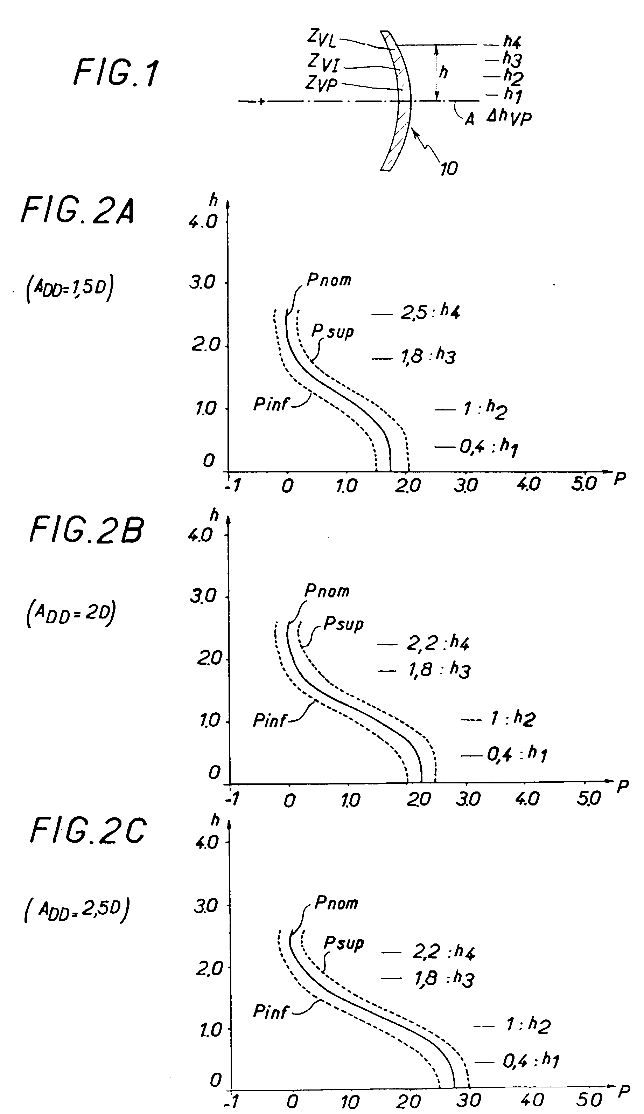

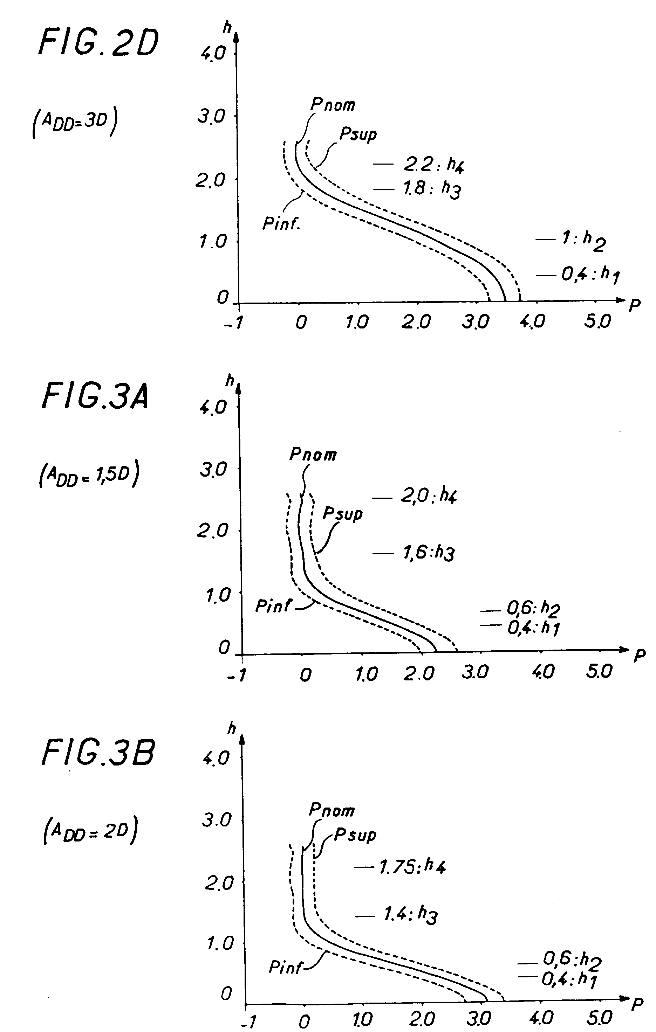

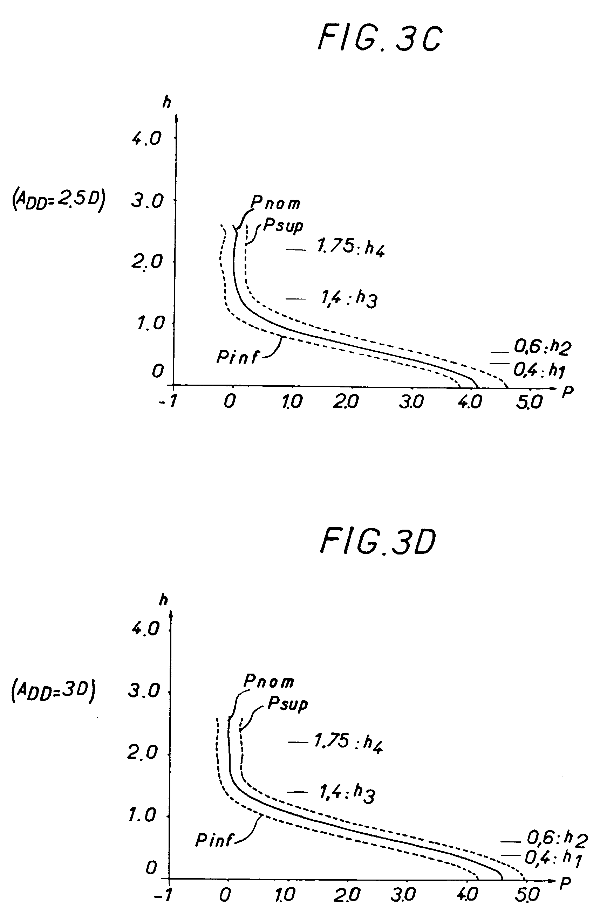

Comme l'illustrent les diagrammes des figures 2 et 3, et tel que décrit dans le brevet français No 89 01417, la courbe représentative de la puissance P de la lentille 10 suivant l'invention en fonction de la distance radiale h à compter de l'axe optique A de l'ensemble, dite ci-après hauteur h, s'inscrit dans une zone comprise entre une courbe enveloppe inférieure $P_{inf}$ et une courbe enveloppe supérieure $P_{sup}$ répondant à des équations polynomiales déterminées dans lesquelles les coefficients dépendent de l'addition $A_{DD}$ correspondant au degré de presbytie du porteur à corriger.

Il est ainsi possible d'y définir, annulairement, de part et d'autre d'une zone de vision intermédiaire $Z_{VI}$, deux zones de vision distinctes, l'une $Z_{VL}$, correspondant à la vision de loin, l'autre, $Z_{VP}$, correspondant à la vision de près.

Préférentiellement, et tel que représenté, la zone de vision de loin $Z_{VL}$ s'étend du côté de la partie périphérique de la lentille ophtalmique 10, tandis que la zone de vision de près $Z_{VP}$ s'étend du côté de l'axe optique A de l'ensemble, plus simplement dit ci-après axe A.

Mais, si désiré, une disposition inverse peut être adoptée.

Soit $h_1$ et $h_2$ les valeurs de la hauteur h entre lesquelles s'étend la zone de vision de près $Z_{VP}$, et $h_3$ et $h_4$ les valeurs de cette hauteur h entre lesquelles s'étend la zone de vision de loin $Z_{VL}$, la zone de vision intermédiaire $Z_{VI}$ s'étendant par définition entre les précédentes, et, donc, entre les valeurs $h_2$ et $h_3$ de la hauteur h.

Pour des raisons pratiques, la valeur $h_4$ de la hauteur h est une valeur maximale correspondant au rayon de la pupille humaine pour un sujet presbyte.

Or, ainsi qu'on le sait, ce rayon, dans les mêmes conditions de luminance, diminue avec l'âge.

La valeur maximale $h_4$ de la hauteur h est donc liée à l'addition $A_{DD}$ nécessaire au porteur à corriger.

Par exemple, et tel que représenté sur les diagrammes des figures 2 et 3, elle est égale à 2,5 mm pour une addition de puissance égale à 1,5 dioptrie (D), et elle est égale à 2,2 mm pour une addition de puissance $A_{DD}$ supérieure à 1,5 dioptrie (D).

Pour des raisons pratiques, également, la valeur $h_1$ de la hauteur h délimitant la zone de vision de près $Z_{VP}$ à proximité de l'axe A est une valeur minimale.

Soit $S_{VP}$ la surface de la zone de vision de près $Z_{VP}$ où se forment de manière convenable les images en vision de près, et $S_{VL}$ la surface de la zone de vision de loin $Z_{VL}$ où se forment de manière convenable les images en vision de loin.

$$S_{VL} = K \left( h_4{}^2 - h_3{}^2 \right)$$

$$S_{VP} = K \left( h_2{}^2 - h_1{}^2 \right)$$

et donc :

$$\frac{S_{VL}}{S_{VP}} = \frac{h_4{}^2 - h_3{}^2}{h_2{}^2 - h_1{}^2}$$

Suivant l'invention, l'une quelconque des deux zones de vision de loin $Z_{VL}$ ou de près $Z_{VP}$ est renforcée par rapport à l'autre, les surfaces $S_{VL}$, $S_{VP}$ correspondantes étant entre elles dans la relation suivante :

pour une vision de près renforcée :

$$1,8 \leq \frac{S_{VL}}{S_{VP}} \leq 3,6 \qquad\qquad\qquad \text{(II)}$$

et, pour une vision de loin renforcée :

$$4,75 \leq \frac{S_{VL}}{S_{VP}} \qquad\qquad\qquad\qquad \text{(III)}$$

Il est procédé pour ce faire à un choix approprié des coefficients des équations polynomiales auxquelles répondent la courbe enveloppe inférieure $P_{inf}$ et la courbe enveloppe supérieure $P_{sup}$ correspondantes.

Suivant l'invention, il a été trouvé que des résultats particulièrement favorables étaient obtenus lorsque ces courbes enveloppe inférieure $P_{inf}$ et enveloppe supérieure $P_{sup}$ répondaient plus précisément aux équations polynomiales suivantes :

$$P_{inf} = f(h) = \sum_{i=0}^{i=6} A'_i\, h^{2i} + P_{VL}$$

$$P_{sup} = f(h) = \sum_{i=0}^{i=6} A''_i\, h^{2i} + P_{VL}$$

dans lesquelles $P_{VL}$ est la puissance nécessaire pour la vision de loin.

Plus précisément, encore, des résultats particulièrement favorables sont obtenus lorsque, pour un renfort, par exemple, de la zone de vision de près $Z_{VP}$ par rapport à la zone de vision de loin $Z_{VL}$, les coefficients $A'_i$ et $A''_i$ ont sensiblement les valeurs suivantes :

pour $A_{DD} = 1,5$ D :

$A'_0 = 1,50491 \qquad A''_0 = 2,04007$
$A'_1 = -1,38224 \cdot 10^{-1} \qquad A''_1 = 4,87097 \cdot 10^{-2}$
$A'_2 = -8,56090 \cdot 10^{-1} \qquad A''_2 = -7,56137 \cdot 10^{-1}$
$A'_3 = 4,77223 \cdot 10^{-1} \qquad A''_3 = 3,28870 \cdot 10^{-1}$
$A'_4 = -1,07980 \cdot 10^{-1} \qquad A''_4 = -6,18287 \cdot 10^{-2}$
$A'_5 = 1,12726 \cdot 10^{-2} \qquad A''_5 = 5,58413 \cdot 10^{-3}$
$A'_6 = -4,47482 \cdot 10^{-4} \qquad A''_6 = -1,98243 \cdot 10^{-4}$

pour $A_{DD} = 2$ D :

$A'_0 = 2,02242 \qquad A''_0 = 2,48815$
$A'_1 = -6,40349 \cdot 10^{-1} \qquad A''_1 = 1,68157 \cdot 10^{-1}$
$A'_2 = -5,33753 \cdot 10^{-1} \qquad A''_2 = -1,19876$
$A'_3 = 3,45296 \cdot 10^{-1} \qquad A''_3 = 5,83726 \cdot 10^{-1}$
$A'_4 = -7,89597 \cdot 10^{-2} \qquad A''_4 = -1,24851 \cdot 10^{-1}$
$A'_5 = 8,16828 \cdot 10^{-3} \qquad A''_5 = 1,27178 \cdot 10^{-2}$
$A'_6 = -3,20478 \cdot 10^{-4} \qquad A''_6 = -5,00502 \cdot 10^{-4}$

pour $A_{DD} = 2,5$ D :

$A'_0 = 2,48274 \qquad A''_0 = 2,97168$
$A'_1 = -8,68865 \cdot 10^{-1} \qquad A''_1 = -2,69412 \cdot 10^{-1}$
$A'_2 = -3,88790 \cdot 10^{-1} \qquad A''_2 = -8,19247 \cdot 10^{-1}$
$A'_3 = 2,79778 \cdot 10^{-1} \qquad A''_3 = 4,23097 \cdot 10^{-1}$
$A'_4 = -6,48836 \cdot 10^{-2} \qquad A''_4 = -9,28940 \cdot 10^{-2}$

$A'_5 = 6,77817 \cdot 10^{-3}$     $A''_5 = 9,73358 \cdot 10^{-3}$
$A'_6 = -2,68852 \cdot 10^{-4}$     $A''_6 = -3,94207 \cdot 10^{-4}$

et pour $A_{DD} = 3\,D$ :

$A'_0 = 3,20707$     $A''_0 = 3,72727$
$A'_1 = -1,13298$     $A''_1 = -5,24234 \cdot 10^{-1}$
$A'_2 = -3,09307 \cdot 10^{-1}$     $A''_2 = -7,92418 \cdot 10^{-1}$
$A'_3 = 2,18484 \cdot 10^{-1}$     $A''_3 = 4,14478 \cdot 10^{-1}$
$A'_4 = -4,43817 \cdot 10^{-2}$     $A''_4 = -8,98178 \cdot 10^{-2}$
$A'_5 = 4,04925 \cdot 10^{-3}$     $A''_5 = 9,32974 \cdot 10^{-3}$
$A'_6 = -1,42370 \cdot 10^{-4}$     $A''_6 = -3,76612 \cdot 10^{-4}$

Sur les diagrammes des figures 2A, 2B, 2C et 2D, sur lesquelles ont été portées en abscisses la puissance P exprimée en dioptries (D) et en ordonnées la hauteur h, exprimée en mm, ont été tracées, en traits interrompus, les courbes enveloppes $P_{inf}$, $P_{sup}$ correspondant, respectivement, pour une valeur de puissance en vision de loin $P_{VL}$ égale à zéro, à une addition $A_{DD}$ égale à 1,5 D pour la figure 2A, égale à 2 D pour la figure 2B, égale à 2,5 D pour la figure 2C, et égale à 3 D pour la figure 2D.

Pour d'autres valeurs, positives ou négatives, de la puissance en vision de loin $P_{VL}$, les courbes enveloppes $P_{inf}$ et $P_{sup}$ se déduisent de celles reproduites par simple translation.

Sur ces diagrammes a en outre été tracée, en trait continu, à titre d'exemple, entre les courbes enveloppes $P_{inf}$ et $P_{sup}$, une courbe $P_{nom}$ représentative d'une puissance nominale donnant tout particulièrement satisfaction.

Cette courbe $P_{nom}$ répond sensiblement à l'équation suivante :

$$P_{nom} = f(h) = \sum_{i=0}^{i=6} A_i\, h^{2i} + P_{VL}$$

avec, dans les mêmes conditions que précédemment, des valeurs sensiblement égales aux suivantes pour les coefficients numériques $A_i$ :

pour $A_{DD} = 1,5\,D$ :

$A_0 = 1,74537$
$A_1 = -1,41485 \cdot 10^{-2}$
$A_2 = -7,74395 \cdot 10^{-1}$
$A_3 = 3,78836 \cdot 10^{-1}$
$A_4 = -7,92805 \cdot 10^{-2}$
$A_5 = 7,88011 \cdot 10^{-3}$
$A_6 = -3,03496 \cdot 10^{-4}$

pour $A_{DD} = 2\,D$ :

$A_0 = 2,25360$
$A_1 = -9,83461 \cdot 10^{-2}$
$A_2 = -1,05467$
$A_3 = 5,47912 \cdot 10^{-1}$
$A_4 = -1,18670 \cdot 10^{-1}$
$A_5 = 1,20372 \cdot 10^{-2}$
$A_6 = -4,68919 \cdot 10^{-4}$

pour $A_{DD} = 2,5\,D$ :

$A_0 = 2,72749$
$A_1 = -2,39063 \cdot 10^{-1}$
$A_2 = -9,80544 \cdot 10^{-1}$
$A_3 = 5,14985 \cdot 10^{-1}$
$A_4 = -1,13158 \cdot 10^{-1}$
$A_5 = 1,17328 \cdot 10^{-2}$
$A_6 = -4,68365 \cdot 10^{-4}$

et pour $A_{DD} = 3$ D :

$A_0 = 3,47334$
$A_1 = -9,73082 \cdot 10^{-1}$
$A_2 = -2,97809 \cdot 10^{-1}$
$A_3 = 1,70028 \cdot 10^{-1}$
$A_4 = -3,05735 \cdot 10^{-2}$
$A_5 = 2,58076 \cdot 10^{-3}$
$A_6 = -8,78906 \cdot 10^{-5}$

Ainsi qu'on le notera, pour chaque valeur de l'addition $A_{DD}$, les courbes enveloppes $P_{inf}$ et $P_{sup}$ suivent globalement, au moins dans leur partie centrale, la courbe nominale $P_{nom}$ correspondante.

Tel que précisé dans le brevet français No 89 01417, il est possible, pour l'homme de l'art, partant de telles courbes de puissance, de déterminer, soit les surfaces à donner aux faces avant et arrière de la lentille ophtalmique 10, soit le gradient d'indice qu'elle doit comporter, pour qu'elle satisfasse à une telle courbe de puissance.

Préférentiellement, la face arrière de la lentille ophtalmique 10 suivant l'invention est une surface sphérique, seule la surface de la face avant étant établie de manière à obtenir la courbe de puissance recherchée.

Cette surface est alors évidemment une surface asphérique.

Mais, en variante, toute combinaison de surfaces, sphériques ou asphériques, ou de gradient d'indice, donnant une courbe de puissance s'inscrivant dans les courbes enveloppes $P_{inf}$ et $P_{sup}$ indiquées, est envisageable.

Suivant l'invention, pour un renfort de la zone de vision de loin $Z_{VL}$ par rapport à la zone de vision de près $Z_{vp}$, les coefficients $A'_i$ et $A''_i$ des équations polynomiales auxquelles répondent les courbes enveloppes $P_{inf}$ et $P_{sup}$ ont sensiblement les valeurs suivantes :

pour $A_{DD} = 1,5$ D :

$A'_0 = 1,97385$      $A''_0 = 2,61695$
$A'_1 = -4,02882$      $A''_1 = -3,55654$
$A'_2 = 2,96745$      $A''_2 = 2,28086$
$A'_3 = -1,08765$      $A''_3 = -7,81238 \cdot 10^{-1}$
$A'_4 = 2,08906 \cdot 10^{-1}$      $A''_4 = 1,46046 \cdot 10^{-1}$
$A'_5 = -2,00552 \cdot 10^{-2}$      $A''_5 = -1,39278 \cdot 10^{-2}$
$A'_6 = 7,57585 \cdot 10^{-4}$      $A''_6 = 5,27592 \cdot 10^{-4}$

pour $A_{DD} = 2$ D :

$A'_0 = 2,75706$      $A''_0 = 3,39285$
$A'_1 = -5,32047$      $A''_1 = -4,30158$
$A'_2 = 3,78466$      $A''_2 = 2,36050$
$A'_3 = -1,34501$      $A''_3 = -6,73486 \cdot 10^{-1}$
$A'_4 = 2,51944 \cdot 10^{-1}$      $A''_4 = 1,05232 \cdot 10^{-1}$
$A'_5 = -2,37123 \cdot 10^{-2}$      $A''_5 = -8,53634 \cdot 10^{-3}$
$A'_6 = 8,81836 \cdot 10^{-4}$      $A''_6 = 2,81049 \cdot 10^{-4}$

pour $A_{DD} = 2,5$ D :

$A'_0 = 3,83883$      $A''_0 = 4,62363$
$A'_1 = -7,19032$      $A''_1 = -5,52815$
$A'_2 = 5,10383$      $A''_2 = 2,82720$
$A'_3 = -1,81741$      $A''_3 = -7,59493 \cdot 10^{-1}$
$A'_4 = 3,41628 \cdot 10^{-1}$      $A''_4 = 1,13108 \cdot 10^{-1}$
$A'_5 = -3,22755 \cdot 10^{-2}$      $A''_5 = -8,84934 \cdot 10^{-3}$
$A'_6 = 1,20462 \cdot 10^{-3}$      $A''_6 = 2,83891 \cdot 10^{-4}$

et pour $A_{DD} = 3$ D :

$A'_0 = 4,20262$      $A''_0 = 4,97173$
$A'_1 = -6,12634$      $A''_1 = -4,36934$
$A'_2 = 3,56706$      $A''_2 = 1,30259$

$A'_3 = -1,09381$         $A''_3 = -7,49894 . 10^{-2}$
$A'_4 = 1,84148 . 10^{-l}$         $A''_4 = -3,14113 . 10^{-2}$
$A'_5 = -1,60397 . 10^{-2}$         $A''_5 = 5,74923 . 10^{-3}$
$A'_6 = 5,63484 . 10^{-4}$         $A''_6 = -2,84487 . 10^{-4}$

Dans les mêmes conditions que précédemment, les coefficients $A_i$ de l'équation polynomiale a laquelle correspond la courbe nominale $P_{nom}$ correspondante ont alors sensiblement les valeurs suivantes :
pour $A_{DD} = 1,5$ D :

$A_0 = 2,26107$
$A_1 = -3,84574$
$A_2 = 2,68329$
$A_3 = -9,50930 . 10^{-l}$
$A_4 = 1,78502 . 10^{-1}$
$A_5 = -1,68366 . 10^{-2}$
$A_6 = 6,26637 . 10^{-4}$

pour $A_{DD} = 2$ D :

$A_0 = 3,11044$
$A_1 = -4,89450$
$A_2 = 3,08637$
$A_3 = -9,92432 . 10^{-1}$
$A_4 = 1,71515 . 10^{-1}$
$A_5 = -1,51366 . 10^{-2}$
$A_6 = 5,34658 . 10^{-4}$

pour $A_{DD} = 2,5$ D :

$A_0 = 4,13733$
$A_1 = -6,26355$
$A_2 = 3,96435$
$A_3 = -1,30970$
$A_4 = 2,34695 . 10^{-1}$
$A_5 = -2,15039 . 10^{-2}$
$A_6 = 7,86718 . 10^{-4}$

et pour $A_{DD} = 3$ D :

$A_0 = 4,61538$
$A_1 = -5,21075$
$A_2 = 2,36892$
$A_3 = -5,47711 . 10^{-1}$
$A_4 = 6,70385 . 10^{-2}$
$A_5 = -4,04791 . 10^{-3}$
$A_6 = 9,12504 . 10^{-5}$

En pratique, les valeurs de hauteur $h_1$, $h_2$, $h_3$, $h_4$ sont conjointement, en mm, sensiblement les suivantes :

|  | A = 1,5 D | A = 2 D<br>A = 2,5 D<br>A = 3 D |
|---|---|---|
| lentille ophtalmique à zone de vision de près $Z_{VP}$ renforcée | $h_1 = 0,4$<br>$h_2 = 1$<br>$h_3 = 1,8$<br>$h_4 = 2,5$ | $h_1 = 0,4$<br>$h_2 = 1$<br>$h_3 = 1,8$<br>$h_4 = 2,2$ |
| lentille ophtalmique à zone de vision de loin $Z_{VL}$ renforcée | $h_1 = 0,4$<br>$h_2 = 0,6$<br>$h_3 = 1,6$<br>$h_4 = 2$ | $h_1 = 0,4$<br>$h_2 = 0,6$<br>$h_3 = 1,4$<br>$h_4 = 1,75$ |

Suivant l'invention, l'une au moins des lentilles ophtalmiques 10 formant un jeu de deux lentilles ophtalmiques 10 appariées l'une à l'autre pour un même porteur, l'une pour la correction de l'oeil gauche de celui-ci, l'autre pour la correction de son oeil droit, a ainsi l'une quelconque de ses deux zones de vision $Z_{VP}$ ou $Z_{VL}$ renforcée par rapport à l'autre.

Suivant les cas, l'autre lentille ophtalmique 10 d'un tel jeu est une lentille ophtalmique 10 standard, c'est-à-dire une lentille ophtalmique dont les zones de vision de près $Z_{VP}$ et de loin $Z_{VL}$ sont équivalentes, par exemple une lentille ophtalmique du type de celle décrite dans le brevet français No 89 01417, ou bien l'une et l'autre de ces lentilles ophtalmiques 10 ont l'une de leurs deux zones de vision de près $Z_{VP}$ ou de loin $Z_{VL}$ renforcée par rapport à l'autre.

Par exemple, dans ce cas, la zone de vision renforcée est la même pour l'une et l'autre des deux lentilles ophtalmiques 10 constituant un même jeu.

En variante, la zone de vision renforcée est la zone de vision de près $Z_{VP}$ pour l'une de ces lentilles ophtalmiques 10, et, pour l'autre, la zone de vision renforcée est la zone de vision de loin $Z_{VL}$.

**Revendications**

1. Lentille ophtalmique à symétrie rotationnelle et vision simultanée pour la correction de la presbytie, comportant deux zones de vision annulaires distinctes, l'une, ($Z_{VL}$), correspondant à la vision de loin, l'autre, ($Z_{VP}$), correspondant à la vision de près, la courbe représentative de la puissance P en fonction de la distance radiale h à compter de l'axe optique (A) de l'ensemble s'inscrivant dans une zone comprise entre une courbe enveloppe inférieure ($P_{inf}$) et une courbe enveloppe supérieure ($P_{sup}$) répondant à des équations polynomiales déterminées dans lesquelles les coefficients dépendent de l'addition de puissance ($A_{DD}$) correspondant au degré de presbytie du porteur, l'une quelconque des deux zones de vision de loin ($Z_{VL}$) ou de près ($Z_{VP}$) étant renforcée par rapport à l'autre, les surfaces $S_{VL}$, $S_{VP}$ correspondantes étant entre elles dans la relation suivante :

$$1,8 \leq \frac{S_{VL}}{S_{VP}} \leq 3,6$$

et les courbes enveloppe inférieure ($P_{inf}$) et enveloppe supérieure ($P_{sup}$) de la puissance P répondant aux équations polynomiales suivantes :

$$P_{inf} = f(h) = \sum_{i=0}^{i=6} A'_i \, h^{2i} + P_{VL}$$

$$P_{sup} = f(h) = \sum_{i=0}^{i=6} A''_i \, h^{2i} + P_{VL}$$

dans lesquelles $P_{VL}$ est la puissance nécessaire pour la vision de loin, avec, pour un renfort de la zone de vision de près ($Z_{VP}$) par rapport à la zone de vision de loin ($Z_{VL}$), des coefficients ($A'_i$ et $A''_i$) ayant les valeurs suivantes :
pour $A_{DD} = 1,5\ D$ :

$A'_0 = 1,50491 \qquad A''_0 = 2,04007$
$A'_1 = -1,38224 \cdot 10^{-1} \qquad A''_1 = 4,87097 \cdot 10^{-2}$
$A'_2 = -8,56090 \cdot 10^{-1} \qquad A''_2 = -7,56137 \cdot 10^{-1}$
$A'_3 = 4,77223 \cdot 10^{-1} \qquad A''_3 = 3,28870 \cdot 10^{-1}$
$A'_4 = -1,07980 \cdot 10^{-1} \qquad A''_4 = -6,18287 \cdot 10^{-2}$
$A'_5 = 1,12726 \cdot 10^{-2} \qquad A''_5 = 5,58413 \cdot 10^{-3}$
$A'_6 = -4,47482 \cdot 10^{-4} \qquad A''_6 = -1,98243 \cdot 10^{-4}$

pour $A_{DD} = 2\ D$

$A'_0 = 2,02242 \qquad A''_0 = 2,48815$
$A'_1 = -6,40349 \cdot 10^{-1} \qquad A''_1 = 1,68157 \cdot 10^{-1}$
$A'_2 = -5,33753 \cdot 10^{-1} \qquad A''_2 = -1,19876$
$A'_3 = 3,45296 \cdot 10^{-1} \qquad A''_3 = 5,83726 \cdot 10^{-1}$
$A'_4 = -7,89597 \cdot 10^{-2} \qquad A''_4 = -1,24851 \cdot 10^{-1}$
$A'_5 = 8,16828 \cdot 10^{-3} \qquad A''_5 = 1,27178 \cdot 10^{-2}$
$A'_6 = -3,20478 \cdot 10^{-4} \qquad A''_6 = -5,00502 \cdot 10^{-4}$

pour $A_{DD} = 2,5\ D$ :

$A'_0 = 2,48274 \qquad A''_0 = 2,97168$
$A'_1 = -8,68865 \cdot 10^{-1} \qquad A''_1 = -2,69412 \cdot 10^{-1}$
$A'_2 = -3,88790 \cdot 10^{-1} \qquad A''_2 = -8,19247 \cdot 10^{-1}$
$A'_3 = 2,79778 \cdot 10^{-1} \qquad A''_3 = 4,23097 \cdot 10^{-1}$
$A'_4 = -6,48836 \cdot 10^{-2} \qquad A''_4 = -9,28940 \cdot 10^{-2}$
$A'_5 = 6,77817 \cdot 10^{-3} \qquad A''_5 = 9,73358 \cdot 10^{-3}$
$A'_6 = -2,68852 \cdot 10^{-4} \qquad A''_6 = -3,94207 \cdot 10^{-4}$

et pour $A_{DD} = 3\ D$ :

$A'_0 = 3,20707 \qquad A''_0 = 3,72727$
$A'_1 = -1,13298 \qquad A''_1 = -5,24234 \cdot 10^{-1}$
$A'_2 = -3,09307 \cdot 10^{-1} \qquad A''_2 = -7,92418 \cdot 10^{-1}$
$A'_3 = 2,18484 \cdot 10^{-1} \qquad A''_3 = 4,14478 \cdot 10^{-1}$
$A'_4 = -4,43817 \cdot 10^{-2} \qquad A''_4 = -8,98178 \cdot 10^{-2}$
$A'_5 = 4,04925 \cdot 10^{-3} \qquad A''_5 = 9,32974 \cdot 10^{-3}$
$A'_6 6= -1,42370 \cdot 10^{-4} \qquad A''_6 = -3,76612 \cdot 10^{-4}$

**2.** Lentille ophtalmique suivant la revendication 1, et dans laquelle la courbe nominale ($P_{nom}$) représentative de la puissance nominale répond à l'équation suivante :

$$P_{nom} = f(h) = \sum_{i=0}^{i=6} A_i \, h^{2i} + P_{VL}$$

avec, dans les mêmes conditions que précédemment,
pour $A_{DD} = 1,5\ D$ :

$A_0 = 1,74537$
$A_1 = -1,41485 \cdot 10^{-2}$

$A_2 = -7,74395 \cdot 10^{-1}$
$A_3 = 3,78836 \cdot 10^{-1}$
$A_4 = -7,92805 \cdot 10^{-2}$
$A_5 = 7,88011 \cdot 10^{-3}$
$A_6 = -3,03496 \cdot 10^{-4}$

pour $A_{DD} = 2$ D :

$A_0 = 2,25360$
$A_1 = -9,83461 \cdot 10^{-2}$
$A_2 = -1,05467$
$A_3 = 5,47912 \cdot 10^{-1}$
$A_4 = -1,18670 \cdot 10^{-1}$
$A_5 = 1,20372 \cdot 10^{-2}$
$A_6 = -4,68919 \cdot 10^{-4}$

pour $A_{DD} = 2,5$ D :

$A_0 = 2,72749$
$A_1 = -2,39063 \cdot 10^{-1}$
$A_2 = -9,80544 \cdot 10^{-1}$
$A_3 = 5,14985 \cdot 10^{-1}$
$A_4 = -1,13158 \cdot 10^{-1}$
$A_5 = 1,17328 \cdot 10^{-2}$
$A_6 = -4,68365 \cdot 10^{-4}$

et pour $A_{DD} = 3$ D :

$A_0 = 3,47334$
$A_1 = -9,73082 \cdot 10^{-1}$
$A_2 = -2,97809 \cdot 10^{-1}$
$A_3 = 1,70028 \cdot 10^{-1}$
$A_4 = -3,05735 \cdot 10^{-2}$
$A_5 = 2,58076 \cdot 10^{-3}$
$A_6 = -8,78906 \cdot 10^{-5}$

3. Lentille ophtalmique à symétrie rotationnelle et vision simultanée pour la correction de la presbytie, comportant deux zones de vision annulaires distinctes, l'une, ($Z_{VL}$), correspondant à la vision de loin, l'autre, ($Z_{Vp}$), correspondant à la vision de près, la courbe représentative de la puissance P en fonction de la distance radiale h à compter de l'axe optique (A) de l'ensemble s'inscrivant dans une zone comprise entre une courbe enveloppe inférieure ($P_{inf}$) et une courbe enveloppe supérieure ($P_{sup}$) répondant à des équations polynomiales déterminées dans lesquelles les coefficients dépendent de l'addition de puissance ($A_{DD}$) correspondant au degré de presbytie du porteur, l'une quelconque des deux zones de vision de loin ($Z_{VL}$) ou de près ($Z_{VP}$) étant renforcée par rapport à l'autre, les surfaces $S_{VL}$, $S_{VP}$ correspondantes étant entre elles dans la relation suivante :

$$4,75 \leq \frac{S_{VL}}{S_{VP}}$$

et les courbes enveloppe inférieure ($P_{inf}$) et enveloppe supérieure ($P_{sup}$) de la puissance P répondant aux équations polynomiales suivantes :

$$P_{inf} = f(h) = \sum_{i=0}^{i=6} A'_i \, h^{2i} + P_{VL}$$

$$P_{sup} = f(h) = \sum_{i=0}^{i=6} A''_i \, h^{2i} + P_{VL}$$

dans lesquelles $P_{VL}$ est la puissance nécessaire pour la vision de loin, avec, pour un renfort de la zone de vision de loin ($Z_{VL}$) par rapport à la zone de vision de près ($Z_{VP}$), des coefficients ($A'_i$ et $A''_i$) ayant les valeurs suivantes :

pour $A_{DD} = 1,5$ D :

$A'_0 = 1,97385$  $A''_0 = 2,61695$
$A'_1 = -4,02882$  $A''_1 = -3,55654$
$A'_2 = 2,96745$  $A''_2 = 2,28086$
$A'_3 = -1,08765$  $A''_3 = -7,81238 \cdot 10^{-1}$
$A'_4 = 2,08906 \cdot 10^{-1}$  $A''_4 = 1,46046 \cdot 10^{-1}$
$A'_5 = -2,00552 \cdot 10^{-2}$  $A''_5 = -1,39278 \cdot 10^{-2}$
$A'_6 = 7,57585 \cdot 10^{-4}$  $A''_6 = 5,27592 \cdot 10^{-4}$

pour $A_{DD} = 2$ D :

$A'_0 = 2,75706$  $A''_0 = 3,39285$
$A'_1 = -5,32047$  $A''_1 = -4,30158$
$A'_2 = 3,78466$  $A''_2 = 2,36050$
$A'_3 = -1,34501$  $A''_3 = -6,73486 \cdot 10^{-1}$
$A'_4 = 2,51944 \cdot 10^{-1}$  $A''_4 = 1,05232 \cdot 10^{-1}$
$A'_5 = -2,37123 \cdot 10^{-2}$  $A''_5 = -8,53634 \cdot 10^{-3}$
$A'_6 = 8,81836 \cdot 10^{-4}$  $A''_6 = 2,81049 \cdot 10^{-4}$

pour $A_{DD} = 2,5$ D :

$A'_0 = 3,83883$  $A''_0 = 4,62363$
$A'_1 = -7,19032$  $A''_1 = -5,52815$
$A'_2 = 5,10383$  $A''_2 = 2,82720$
$A'_3 = -1,81741$  $A''_3 = -7,59493 \cdot 10^{-1}$
$A'_4 = 3,41628 \cdot 10^{-1}$  $A''_4 = 1,13108 \cdot 10^{-1}$
$A'_5 = -3,22755 \cdot 10^{-2}$  $A''_5 = -8,84934 \cdot 10^{-3}$
$A'_6 = 1,20462 \cdot 10^{-3}$  $A''_6 = 2,83891 \cdot 10^{-4}$

et pour $A_{DD} = 3$ D :

$A'_0 = 4,20262$  $A''_0 = 4,97173$
$A'_1 = -6,12634$  $A''_1 = -4,36934$
$A'_2 = 3,56706$  $A''_2 = 1,30259$
$A'_3 = -1,09381$  $A''_3 = -7,49894 \cdot 10^{-2}$
$A'_4 = 1,84148 \cdot 10^{-1}$  $A''_4 = -3,14113 \cdot 10^{-2}$
$A'_5 = -1,60397 \cdot 10^{-2}$  $A''_5 = 5,74923 \cdot 10^{-3}$
$A'_6 = 5,63484 \cdot 10^{-4}$  $A''_6 = -2,84487 \cdot 10^{-4}$

**4.** Lentille ophtalmique suivant la revendication 3, et dans laquelle la courbe ($P_{nom}$) représentative de sa puissance nominale répond à l'équation suivante:

$$P_{nom} = f(h) = \sum_{i=0}^{i=6} A_i \, h^{2i} + P_{VL}$$

avec, dans les mêmes conditions que précédemment,

pour $A_{DD} = 1,5$ D :

$A_0 = 2,26107$
$A_1 = -3,84574$
$A_2 = 2,68329$
$A_3 = -9,50930 \cdot 10^{-1}$
$A_4 = 1,78502 \cdot 10^{-1}$
$A_5 = -1,68366 \cdot 10^{-2}$
$A_6 = 6,26637 \cdot 10^{-4}$

pour $A_{DD} = 2$ D :

$A_0 = 3,11044$
$A_1 = -4,89450$
$A_2 = 3,08637$
$A_3 = -9,92432 . 10^{-1}$
$A_4 = 1,71515 . 10^{-1}$
$A_5 = -1,51366 . 10^{-2}$
$A_6 = 5,34658 . 10^{-4}$

pour $A_{DD} = 2,5$ D :

$A_0 = 4,13733$
$A_1 = -6,26355$
$A_2 = 3,96435$
$A_3 = -1,30970$
$A_4 = 2,34695 . 10^{-1}$
$A_5 = -2,15039 . 10^{-2}$
$A_6 = 7,86718 . 10^{-4}$

et pour $A_{DD} = 3$ D :

$A_0 = 4,61538$
$A_1 = -5,21075$
$A_2 = 2,36892$
$A_3 = -5,47711 . 10^{-1}$
$A_4 = 6,70385 . 10^{-2}$
$A_5 = -4,04791 . 10^{-3}$
$A_6 = 9,12504 . 10^{-5}$

5. Jeu de deux lentilles ophtalmiques appariées l'une à l'autre pour un même porteur, l'une pour la correction de l'oeil gauche de celui-ci, l'autre pour la correction de son oeil droit, jeu dans lequel l'une au moins des lentilles ophtalmiques (10) qui le constituent est conforme à l'une quelconque des revendications 1 à 4.

6. Jeu de deux lentilles ophtalmiques suivant la revendication 5, et dans lequel l'autre des lentilles ophtalmiques (10) qui le constituent est une lentille ophtalmique (10) standard, dont les zones de vision de près ($Z_{VP}$) et de loin ($z_{VL}$) sont équivalentes.

7. Jeu de deux lentilles ophtalmiques suivant la revendication 5, et dans lequel la zone de vision renforcée est la même pour l'une et l'autre des deux lentilles ophtalmiques (10) qui le constituent.

8. Jeu de deux lentilles ophtalmiques suivant la revendication 5, et dans lequel, pour l'une des deux lentilles ophtalmiques (10) qui le constituent, la zone de vision renforcée est la zone de vision de près ($Z_{VP}$), et, pour l'autre, la zone de vision renforcée est la zone de vision de loin ($Z_{VL}$).

**Patentansprüche**

1. Ophthalmische Linse mit Rotationssymmetrie und simultanem Sehbereich für die Korrektur der Presbyopie, umfassend zwei unterschiedliche, ringförmige Sehbereiche, von welchen der eine ($Z_{VL}$) dem Sehen in die Ferne und der andere ($Z_{VP}$) dem Sehen in der Nähe entspricht, wobei die repräsentative Kurve der Brechkraft P als Funktion des radialen Abstandes h in bezug auf die optische Achse (A) der Gesamtheit in einen Bereich zwischen einer unteren, umhüllenden Kurve (Pinf) und einer oberen, umhüllenden Kurve (Psup) paßt, welche bestimmten polynomischen Gleichungen genügen, in welchen die Koeffizienten von der Addition der Brechkraft ($A_{DD}$) entsprechend dem Grad der Presbyopie des Trägers abhängen, wobei ein beliebiger der zwei Bereiche für das Sehen in die Ferne ($Z_{VL}$) oder in die Nähe ($Z_{VP}$) in bezug auf den anderen verstärkt ist, wobei die entsprechenden Oberflächen $S_{VL}$, $S_{VP}$ zueinander in der folgenden Beziehung stehen:

$$1,8 \leq \frac{S_{VL}}{S_{VP}} \leq 3,6$$

und die untere, umhüllende Kurve ($P_{inf}$) und die obere, umhüllende Kurve ($P_{sup}$) der Brechkraft P den folgenden polynomischen Gleichungen genügen:

$$P_{inf} = f(h) = \sum_{i=0}^{i=6} A'_i h^{2i} + P_{VL}$$

$$P_{sup} = f(h) = \sum_{i=0}^{i=6} A''_i h^{2i} + P_{VL}$$

in welchen $P_{VL}$ die notwendige Brechkraft für das Sehen in die Ferne ist, mit Koeffizienten ($A'_i$ und $A''_i$), welche die folgenden Werte für eine Verstärkung des Bereiches des Sehens in der Nähe ($Z_{VP}$) in bezug auf den Bereich des Sehens in die Ferne ($Z_{VL}$) aufweisen:

für ADD = 1,5 D:

$A'_0 = 1,50491$  $A''_0 = 2,04007$
$A'_1 = -1,38224 . 10^{-1}$  $A''_1 = 4,87097 . 10^{-2}$
$A'_2 = -8,56090 . 10^{-1}$  $A''_2 = -7,56137 . 10^{-1}$
$A'_3 = 4,77223 . 10^{-1}$  $A''_3 = 3,28870 . 10^{-1}$
$A'_4 = -1,07980 . 10^{-1}$  $A''_4 = -6,18287 . 10^{-2}$
$A'_5 = 1,12726 . 10^{-2}$  $A''_5 = 5,58413 . 10^{-3}$
$A'_6 = -4,47482 . 10^{-4}$  $A''_6 = -1,98243 . 10^{-4}$

für $A_{DD}$ = 2 D:

$A'_0 = 2,02242$  $A''_0 = 2,48815$
$A'_1 = -6,40349 . 10^{-1}$  $A''_1 = 1,68157 . 10^{-1}$
$A'_2 = -5,33753 . 10^{-1}$  $A''_2 = -1,19876$
$A'_3 = 3,45296 . 10^{-1}$  $A''_3 = 5,83726 . 10^{-1}$
$A'_4 = -7,89597 . 10^{-2}$  $A''4 = -1,24851 . 10^{-1}$
$A'_5 = 8,16828 . 10^{-3}$  $A''_5 = 1,27178 . 10^{-2}$
$A'_6 = -3,20478 . 10^{-4}$  $A''_6 = -5,00502 . 10^{-4}$

für $A_{DD}$ = 2,5 D:

$A'_0 = 2,48274$  $A''_0 = 2,97168$
$A'_1 = -8,68865 . 10^{-1}$  $A''_1 = -2,69412 . 10^{-1}$
$A'_2 = -3,88790 . 10^{-1}$  $A''_2 = -8,19247 . 10^{-1}$
$A'_3 = 2,79778 . 10^{-1}$  $A''_3 = 4,23097 . 10^{-1}$
$A'_4 = -6,48836 . 10^{-2}$  $A''_4 = -9,28940 . 10^{-2}$
$A'_5 = 6,77817 . 10^{-3}$  $A''_5 = 9,73358 . 10^{-3}$
$A'_6 = -2,68852 . 10^{-4}$  $A''_6 = -3,94207 . 10^{-4}$

für $A_{DD}$ = 3 D:

$A'_0 = 3,20707$  $A''_0 = 3,72727$
$A'_1 = -1,13298$  $A''_1 = -5,24234 . 10^{-1}$
$A'_2 = -3,09307 . 10^{-1}$  $A''2 = -7,92418 . 10^{-1}$
$A'_3 = 2,18484 . 10^{-1}$  $A''_3 = 4,14478 . 10^{-1}$
$A'_4 = -4,43817 . 10^{-2}$  $A''_4 = -8,98178 . 10^{-2}$
$A'_5 = 4,04925 . 10^{-3}$  $A''_5 = 9,32974 . 10^{-3}$
$A'_6 = -1,42370 . 10^{-4}$  $A''_6 = -3,76612 . 10^{-4}$

2. Ophthalmische Linse nach Anspruch 1 und in welcher die repräsentative Kennlinie ($P_{nom}$) der Nennbrechkraft der folgenden Gleichung genügt:

$$P_{nom} = f(h) = \sum_{i=0}^{i=6} A_i h^{2i} + P_{VL}$$

mit, unter denselben Bedingungen wie zuvor,

für $A_{DD}$ = 1,5 D:

$A_0$ = 1,74537
$A_1$ = -1,41485 . $10^{-2}$
$A_2$ = -7,74395 . $10^{-1}$
$A_3$ = 3,78836 . $10^{-1}$
$A_4$ = -7,92805 . $10^{-2}$
$A_5$ = 7,88011 . $10^{-3}$
$A_6$ = -3,03496 . $10^{-4}$

für $A_{DD}$ = 2 D:

$A_0$ = 2,25360
$A_1$ = -9,83461 . $10^{-2}$
$A_2$ = -1,05467
$A_3$ = 5,47912 . $10^{-1}$
$A_4$ = -1,18670 . $10^{-1}$
$A_5$ = 1,20372 . $10^{-2}$
A6 = -4,68919 . $10^{-4}$

für $A_{DD}$ = 2,5 D:

$A_0$ = 2,72749
$A_1$ = -2,39063 . $10^{-1}$
$A_2$ = -9,80544 . $10^{-1}$
$A_3$ = 5,14985 . $10^{-1}$
$A_4$ = -1,13158 . $10^{-1}$
$A_5$ = 1,17328 . $10^{-2}$
$A_6$ = -4,68365 . $10^{-4}$

für $A_{DD}$ = 3 D:

$A_0$ = 3,47334
$A_1$ = -9,73082 . $10^{-1}$
$A_2$ = -2,97809 . $10^{-1}$
$A_3$ = 1,70028 . $10^{-1}$
$A_4$ = -3,05735 . $10^{-2}$
$A_5$ = 2,58076 . $10^{-3}$
$A_6$ = -8,78906 . $10^{-5}$

3. Ophthalmische Linse mit Rotationssymmetrie und simultanem Sehbereich für die Korrektur der Presbyopie, umfassend zwei unterschiedliche, ringförmige Sehbereiche, von welchen der eine ($Z_{VL}$) dem Sehen in die Ferne und der andere ($Z_{VP}$) dem Sehen in der Nähe entspricht, wobei die repräsentative Kurve der Brechkraft P als Funktion des radialen Abstandes h in bezug auf die optische Achse (A) der Gesamtheit in einen Bereich zwischen einer unteren, umhüllenden Kurve (Pinf) und einer oberen, umhüllenden Kurve ($P_{sup}$) paßt, welche bestimmten polynomischen Gleichungen genügen, in welchen die Koeffizienten von der Addition der Brechkraft ($A_{DD}$) entsprechend dem Grad der Presbyopie des Trägers abhängen, wobei ein beliebiger der zwei Bereiche für das Sehen in die Ferne ($Z_{VL}$) oder in die Nähe ($Z_{VP}$) in bezug auf den anderen verstärkt ist, wobei die entsprechenden Oberflächen $S_{VL}$, $S_{VP}$ zueinander in der folgenden Beziehung stehen:

$$4{,}75 \leq \frac{S_{VL}}{S_{VP}}$$

und die untere, umhüllende Kurve Pinf und die obere, umhüllende Kurve $P_{sub}$ der Brechkraft P den folgenden polynomischen Gleichungen genügen:

$$P_{inf} = f(h) = \sum_{i=0}^{i=6} A'_i h^{2i} + P_{VL}$$

$$P_{sup} = f(h) = \sum_{i=0}^{i=6} A''_i h^{2i} + P_{VL}$$

in welchen $P_{VL}$ die notwendige Brechkraft für das Sehen in die Ferne ist, mit Koeffizienten ($A'_i$ und $A''_i$), welche die folgenden Werte für eine Verstärkung des Bereichs des Sehens in die Ferne ($Z_{VL}$) in bezug auf den Bereich des Sehens in der Nähe ($Z_{VP}$) aufweisen:

für $A_{DD} = 1,5$ D:

$A'_0 = 1,97385$     $A''_0 = 2,61695$
$A'_1 = -4,02882$     $A''_1 = -3,55654$
$A'_2 = 2,96745$     $A''_2 = 2,28086$
$A'_3 = -1,08765$     $A''_3 = -7,81238 \cdot 10^{-1}$
$A'_4 = 2,08906 \cdot 10^{-1}$     $A''_4 = 1,46046 \cdot 10^{-1}$
$A'_5 = -2,00552 \cdot 10^{-2}$     $A''_5 = -1,39278 \cdot 10^{-2}$
$A'_6 = 7,57585 \cdot 10^{-4}$     $A''_6 = 5,27592 \cdot 10^{-4}$

für $A_{DD} = 2$ D:

$A'_0 = 2,75706$     $A''_0 = 3,39285$
$A'_1 = -5,32047$     $A''_1 = -4,30158$
$A'_2 = 3,78466$     $A''_2 = 2,36050$
$A'_3 = -1,34501$     $A''_3 = -6,73486 \cdot 10^{-1}$
$A'_4 = 2,51944 \cdot 10^{-1}$     $A''_4 = 1,05232 \cdot 10^{-1}$
$A'_5 = -2,37123 \cdot 10^{-2}$     $A''_5 = -8,53634 \cdot 10^{-3}$
$A'_6 = 8,81836 \cdot 10^{-4}$     $A''_6 = 2,81049 \cdot 10^{-4}$

für ADD $= 2,5$ D:

$A'_0 = 3,83883$     $A''_0 = 4,62363$
$A'_1 = -7,19032$     $A''_1 = -5,52815$
$A'_2 = 5,10383$     $A''_2 = 2,82720$
$A'_3 = -1,81741$     $A''_3 = -7,59493 \cdot 10^{-1}$
$A'_4 = 3,41628 \cdot 10^{-1}$     $A''_4 = 1,13108 \cdot 10^{-1}$
$A'_5 = -3,22755 \cdot 10^{-2}$     $A''_5 = -8,84934 \cdot 10^{-3}$
$A'_6 = 1,20462 \cdot 10^{-3}$     $A''_6 = 2,83891 \cdot 10^{-4}$

und für $A_{DD} = 3$ D:

$A'_0 = 4,20262$     $A''_0 = 4,97173$
$A'_1 = -6,12634$     $A''_1 = -4,36934$
$A'_2 = 3,56706$     $A''_2 = 1,30259$
$A'_3 = -1,09381$     $A''_3 = -7,49894 \cdot 10^{-2}$
$A'_4 = 1,84148 \cdot 10^{-1}$     $A''_4 = -3,14113 \cdot 10^{-2}$
$A'_5 = -1,60397 \cdot 10^{-2}$     $A''_5 = 5,74923 \cdot 10^{-3}$
$A'_6 = 5,63484 \cdot 10^{-4}$     $A''_6 = -2,84487 \cdot 10^{-4}$

4. Ophthalmische Linse nach Anspruch 3 und in welcher die repräsentative Kurve ($P_{nom}$) in ihrer Nennbrechkraft der folgenden Gleichung genügt:

$$P_{nom} = f(h) = \sum_{i=0}^{i=6} A_i h^{2i} + P_{VL}$$

mit, unter denselben Bedingungen wie zuvor,

für $A_{DD} = 1,5$ D:

$A_0 = 2,26107$
$A_1 = -3,84574$
$A_2 = 2,68329$
$A_3 = -9,50930 . 10^{-1}$
$A_4 = 1,78502 . 10^{-1}$
$A_5 = -1,68366 . 10^{-2}$
$A_6 = 6,26637 . 10^{-4}$

für $A_{DD} = 2$ D:

$A_0 = 3,11044$
$A_1 = -4,89450$
$A_2 = 3,08637$
$A_3 = -9,92432 . 10^{-1}$
$A_4 = 1,71515 . 10^{-1}$
$A_5 = -1,51366 . 10^{-2}$
$A_6 = 5,34658 . 10^{-4}$

für ADD = 2,5 D:

$A_0 = 4,13733$
$A_1 = -6,26355$
$A_2 = 3,96435$
$A_3 = -1,30970$
$A_4 = 2,34695 . 10^{-1}$
$A_5 = -2,15039 . 10^{-2}$
$A_6 = 7,86718 . 10^{-4}$

und für $A_{DD} = 3$ D:

$A_0 = 4,61538$
$A_1 = -5,21075$
$A_2 = 2,36892$
$A_3 = -5,47711 . 10^{-1}$
$A_4 = 6,70385 . 10^{-2}$
$A_5 = -4,04791 . 10^{-3}$
$A_6 = 9,12504 . 10^{-5}$

5. Satz von zwei gepaarten, ophthalmischen Linsen, welche sowohl die eine als auch die andere, für denselben Träger sind, die eine für die Korrektur des linken Auges desselben, die andere für die Korrektur seines rechten Auges, wobei in dem Satz wenigstens eine der ophthalmischen Linsen (10) in Übereinstimmung mit einem der Ansprüche 1 bis 4 ausgebildet ist.

6. Satz von zwei ophthalmischen Linsen nach Anspruch 5, und in welchem die andere der ophthalmischen Linsen (10), welche den Satz bilden, eine ophthalmische Standardlinse (10) ist, deren Sehbereiche für die Nähe ($Z_{VP}$) und für die Ferne ($Z_{VL}$) gleich sind.

7. Satz von zwei ophthalmischen Linsen nach Anspruch 5, und in welchem der verstärkte Bereich des Sehens gleich ist für sowohl die eine als auch die andere der zwei ophthalmischen Linsen (10), welche den Satz bilden.

8. Satz von zwei ophthalmischen Linsen nach Anspruch 5, und in welchem für die eine der zwei ophthalmischen Linsen (10), welche den Satz bilden, der verstärkte Bereich des Sehens der Bereich des Sehens in der Nähe ($Z_{VP}$) ist und für die andere der verstärkte Bereich des Sehens der Bereich für das Sehen in die Ferne ($Z_{VL}$) ist.

**Claims**

1. A rotationally symmetrical ophthalmic lens with simultaneous vision for the correction of presbyopia, comprising two separate annular viewing zones, one ($Z_{VL}$) corresponding to far vision and the other ($Z_{VP}$) corresponding to close vision, the curve representative of the power P in dependence on the radial distance h from the optical axis (A) of the assembly being inscribed in a zone between a lower envelope curve ($P_{inf}$) and an upper envelope curve ($P_{Sup}$) corresponding to given polynomial equations in which the coefficients depend on the addition of power (ADD) corresponding to the degree of presbyopia of the wearer, either one of the two far or close viewing zones ($Z_{VL}$, $Z_{VP}$) being reinforced with respect to the other, the corresponding surfaces ($S_{VL}$, $S_{VP}$) being between them in the following relationship:

$$1.8 \leq \frac{S_{VL}}{S_{VP}} \leq 3.6$$

and the lower envelope curve ($P_{inf}$) and the upper envelope curve ($P_{sup}$) of the power P corresponding to the following polynomial equations:

$$P_{inf} = f(h) = \sum_{i=0}^{i=6} A'_i \, h^{2i} + P_{VL}$$

$$P_{sup} = f(h) = \sum_{i=0}^{i=6} A''_i \, h^{2i} + P_{VL}$$

in Which $P_{VL}$ is the power necessary for close vision, with, for reinforcement of the close viewing zone ($Z_{VP}$) with respect to the far viewing zone ($Z_{VL}$), coefficients ($A'_i$ and $A''_i$) of the following values:

for $A_{DD} = 1,5$ D :

$A'_0 = 1,50491$     $A''_0 = 2,04007$
$A'_1 = -1,38224 \cdot 10^{-1}$     $A''_1 = 4,87097 \cdot 10^{-2}$
$A'_2 = -8,56090 \cdot 10^{-1}$     $A''_2 = -7,56137 \cdot 10^{-1}$
$A'_3 = 4,77223 \cdot 10^{-1}$     $A''_3 = 3,28870 \cdot 10^{-1}$
$A'_4 = -1,07980 \cdot 10^{-1}$     $A''_4 = -6,18287 \cdot 10^{-2}$
$A'_5 = 1,12726 \cdot 10^{-2}$     $A''_5 = 5,58413 \cdot 10^{-3}$
$A'_6 = -4,47482 \cdot 10^{-4}$     $A''_6 = -1,98243 \cdot 10^{-4}$

for $A_{DD} = 2$ D

$A'_0 = 2,02242$     $A''_0 = 2,48815$
$A'_1 = -6,40349 \cdot 10^{-1}$     $A''_1 = 1,68157 \cdot 10^{-1}$
$A'_2 = -5,33753 \cdot 10^{-1}$     $A''_2 = -1,19876$
$A'_3 = 3,45296 \cdot 10^{-1}$     $A''_3 = 5,83726 \cdot 10^{-1}$
$A'_4 = -7,89597 \cdot 10^{-2}$     $A''_4 = -1,24851 \cdot 10^{-1}$
$A'_5 = 8,16828 \cdot 10^{-3}$     $A''_5 = 1,27178 \cdot 10^{-2}$
$A'_6 = -3,20478 \cdot 10^{-4}$     $A''_6 = -5,00502 \cdot 10^{-4}$

for $A_{DD}$ - 2.5 D :

$A'_0 = 2,48274$     $A''_0 = 2,97168$
$A'_1 = -8,68865 \cdot 10^{-1}$     $A''_1 = -2,69412 \cdot 10^{-1}$
$A'_2 = -3,88790 \cdot 10^{-1}$     $A''_2 = -8,19247 \cdot 10^{-1}$
$A'_3 - 2,79778 \cdot 10^{-1}$     $A''_3 = 4,23097 \cdot 10^{-1}$
$A'_4 = -6,48836 \cdot 10^{-2}$     $A''_4 = -9,28940 \cdot 10^{-2}$
$A'_5 = 6,77817 \cdot 10^{-3}$     $A''_5 = 9,73358 \cdot 10^{-3}$

$A'_6 = -2{,}68852 . 10^{-4}$ $\qquad$ $A''_6 = -3{,}94207 . 10^{-4}$

and for $A_{DD} = 3$ D :

$A'_0 = 3{,}20707$ $\qquad$ $A''_0 = 3{,}72727$
$A'_1 = -1{,}13298$ $\qquad$ $A''_1 = -5{,}24234 . 10^{-1}$
$A'_2 = -3{,}09307 . 10^{-1}$ $\qquad$ $A''_2 = -7{,}92418 . 10^{-1}$
$A'_3 = 2{,}18484 . 10^{-1}$ $\qquad$ $A''_3 = 4{,}14478 . 10^{-1}$
$A'_4 = -4{,}43817 . 10^{-2}$ $\qquad$ $A''_4 = -8{,}98178 . 10^{-2}$
$A'_5 = 4{,}04925 . 10^{-3}$ $\qquad$ $A''_5 = 9{,}32974 . 10^{-3}$
$A'_6 = -1{,}42370 . 10^{-4}$ $\qquad$ $A''_6 = -3{,}76612 . 10^{-4}$

2. An ophthalmic lens according to claim 1 and wherein the nominal curve ($P_{nom}$) representative of the nominal power corresponds to the following equation:

$$P_{nom} = f(h) = \sum_{i=0}^{i=6} A_i h^{2i} + P_{VL}$$

with, under the sane conditions as previously:

for $_{ADD}$ - 1,5 D :

$A_0 = 1{,}74537$
$A_1 = -1{,}41485 . 10^{-2}$
$A_2 = -7{,}74395 . 10^{-1}$
$A_3 = 3{,}78836 . 10^{-1}$
$A_4 = -7{,}92805 . 10^{-2}$
$A_5 = 7{,}88011 . 10^{-3}$
$A_6 = -3{,}03496 . 10^{-4}$

for $A_{DD} = 2$ D :

$A_0 = 2{,}25360$
$A_1 = -9{,}83461 . 10^{-2}$
$A_2 = -1{,}05467$
$A_3 = -5{,}47912 . 10^{-1}$
$A_4 = -1{,}18670 . 10^{-1}$
$A_5 = 1{,}20372 . 10^{-2}$
$A_6 = -4{,}68919 . 10^{-4}$

for $A_{DD} = 2{,}5$ D :

$A_0 = 2{,}72749$
$A_1 = -2{,}39063 . 10^{-1}$
$A_2 = -9{,}80544 . 10^{-1}$
$A_3 = 5{,}14985 . 10^{-1}$
$A_4 = -1{,}13158 . 10^{-1}$
$A_5 = 1{,}17328 . 10^{-2}$
$A_6 = -4{,}68365 . 10^{-4}$

and for $A_{DD} = 3$ D :

$A_0 = 3{,}47334$
$A_1 = -9{,}73082 . 10^{-1}$
$A_2 = -2{,}97809 . 10^{-1}$
$A_3 = 1{,}70028 . 10^{-1}$
$A_4 = -3{,}05735 . 10^{-2}$
$A_5 = 2{,}58076 . 10^{-3}$
$A_6 = -8{,}78906 . 10^{-5}$

3. A rotationally symmetrical ophthalmic lens with simultaneous vision for the correction of presbyopia, comprising two separate annular viewing zones, one ($Z_{VL}$) corresponding to far vision and the other ($Z_{VP}$) corresponding to close vision, the curve representative of the power P in dependence on the radial distance h from the optical axis (A) of the assembly being inscribed in a zone between a lower envelope curve ($P_{inf}$) and an upper envelope curve (P sup ) corresponding to given polynomial equations in which the coefficients depend on the addition of power ($A_{DD}$) corresponding to the degree of presbyopia of the wearer, either one of the two far or close viewing zones ($Z_{VL}$, $Z_{VP}$) being reinforced with respect to the other, the corresponding surfaces ($S_{VL}$, $S_{VP}$) being between them in the following relationship:

$$4,75 \leq \frac{S_{VL}}{S_{VP}}$$

and the lower envelope curve ($P_{inf}$) and the upper envelope curve ($P_{Sup}$) of the power P corresponding to the following polynomial equations:

$$P_{inf} = f(h) = \sum_{i=0}^{i=6} A'_i \, h^{2i} + P_{VL}$$

$$P_{sup} = f(h) = \sum_{i=0}^{i=6} A''_i \, h^{2i} + P_{VL}$$

in which $P_{VL}$ is the power necessary for close vision, with, for reinforcement of the close viewing zone ($Z_{VP}$) with respect to the far viewing zone ($Z_{VL}$), coefficients ($A'_i$ and $A''_i$) of the following values:

for $A_{DD} = 1,5$ D :

$A'_0 = 1,97385$     $A''_0 = 2,61695$
$A'_1 = -4,02882$     $A''_1 = -3,55654$
$A'_2 = 2,96745$     $A''_2 = 2,28086$
$A'_3 = -1,08765$     $A''_3 = -7,81238 \cdot 10^{-1}$
$A'_4 = 2,08906 \cdot 10^{-1}$     $A''_4 = 1,46046 \cdot 10^{-1}$
$A'_5 = -2,00552 \cdot 10^{-2}$     $A''_5 = -1,39278 \cdot 10^{-2}$
$A'_6 = 7,57585 \cdot 10^{-4}$     $A''_6 = 5,27592 \cdot 10^{-4}$

for $A_{DD} = 2$ D :

$A'_0 = 2,75706$     $A''_0 = 3,39285$
$A'_1 = -5,32047$     $A''_1 = -4,30158$
$A'_2 = 3,78466$     $A''_2 = 2,36050$
$A'_3 = -1,34501$     $A''_3 = -6,73486 \cdot 10^{-1}$
$A'_4 = 2,51944 \cdot 10^{-1}$     $A''_4 = 1,05232 \cdot 10^{-1}$
$A'_5 = -2,37123 \cdot 10^{-2}$     $A''_5 = -8,53634 \cdot 10^{-3}$
$A'_6 = 8,81836 \cdot 10^{-4}$     $A''_6 = 2,81049 \cdot 10^{-4}$

for $A_{DD} = 2,5$ D :

$A'_0 = 3,83883$     $A''_0 = 4,62363$
$A'_1 = -7,19032$     $A''_1 = -5,52815$
$A'_2 = 5,10383$     $A''_2 = 2,82720$
$A'_3 = -1,81741$     $A''_3 = -7,59493 \cdot 10^{-1}$
$A'_4 = 3,41628 \cdot 10^{-1}$     $A''_4 = 1,13108 \cdot 10^{-1}$
$A'_5 = -3,22755 \cdot 10^{-2}$     $A''_5 = -8,84934 \cdot 10^{-3}$
$A'_6 = 1,20462 \cdot 10^{-3}$     $A''_6 = 2,83891 \cdot 10^{-4}$

and for $A_{DD} = 3$ D :

$A'_0 = 4,20262$     $A''_0 = 4,97173$
$A'_1 = -6,12634$     $A''_1 = -4,36934$

$A'_2 = 3,56706$      $A''_2 = 1,30259$
$A'_3 = -1,09381$      $A''_3 = -7,49894 . 10^{-2}$
$A'_4 = 1,84148 . 10^{-1}$      $A''_4 = -3,14113 . 10^{-2}$
$A'_5 = -1,60397 . 10^{-2}$      $A''_5 = 5,74923 . 10^{-3}$
$A'_6 = 5,63484 . 10^{-4}$      $A''_6 = -2,84487 . 10^{-4}$

4. An ophthalmic lens according to claim 3 and wherein the curve ($P_{nom}$) representative of its nominal power corresponds to the following equation:

$$P_{nom} = f(h) = \sum_{i=0}^{i=6} A_i \, h^{2i} + P_{VL}$$

with, under the sane conditions as previously:

for $A_{DD} = 1,5$ D :

$A_0 = 2,26107$
$A_1 = -3,84574$
$A_2 = 2,68329$
$A_3 = -9,50930 . 10^{-1}$
$A_4 = 1,78502 . 10^{-1}$
$A_5 = -1,68366 . 10^{-2}$
$A_6 = 6,26637 = 10^{-4}$

for $A_{DD} = 2$ D :

$A_0 = 3,11044$
$A_1 = -4,89450$
$A_2 = 3,08637$
$A_3 = -9,92432 . 10^{-1}$
$A_4 = 1,71515 . 10^{-1}$
$A_5 = -1,51366 . 10^{-2}$
$A_6 = 5,34658 . 10^{-4}$

for $A_{DD} = 2,5$ D :

$A_0 = 4,13733$
$A_1 = -6.26355$
$A_2 = 3,96435$
$A_3 = -1,30970$
$A_4 = 2,34695 . 10^{-1}$
$A_5 = -2,15039 . 10^{-2}$
$A_6 = 7,86718 . 10^{-4}$

and for $A_{DD} = 3$ D :

$A_0 = 4,61538$
$A_1 = -5,21075$
$A_2 = 2,36892$
$A_3 = -5,47711 . 10^{-1}$
$A_4 = 6,70385 . 10^{-2}$
$A_5 = -4,04791 . 10^{-3}$
$A_6 = 9,12504 . 10^{-5}$

5. A set of two ophthalmic lenses which are matched to each other for the same wearer, one for correcting the left eye of the wearer and the other for correcting the right eye of the wearer, in which set at least one of the ophthalmic lenses (10) which constitute the set is in accordance with any one of claims 1 to 4.

6. A set of two ophthalmic lenses according to claim 5 and wherein the other of the ophthalmic lenses (10) which constitute the set is a standard ophthalmic lens (10) whose close and far viewing zones ($Z_{VP}$), $Z_{VL}$) are equivalent.

7. A set of two ophthalmic lenses according to claim 5 and wherein the reinforced viewing zone is the same for both of the two ophthalmic lenses (10) which constitute the set.

8. A set of two ophthalmic lenses according to claim 5 and wherein, for one of the two ophthalmic lenses (10) which constitute the set, the reinforced viewing zone is the close viewing zone ($Z_{VP}$) and for the other the reinforced viewing zone is the far viewing zone ($Z_{VL}$).

FIG.1

FIG.2A

$(A_{DD}=1,5D)$

FIG.2B

$(A_{DD}=2D)$

FIG.2C

$(A_{DD}=2,5D)$

FIG.2D

$(A_{DD}=3D)$

FIG.3A

$(A_{DD}=1,5D)$

FIG.3B

$(A_{DD}=2D)$

## FIG. 3C

(A_DD = 2,5 D)

## FIG. 3D

(A_DD = 3D)